# FASCICULE DE BREVET EUROPEEN

(11) **EP 4 235 024 B1**
(45) Date de publication et mention de la délivrance du brevet: **18.03.2026**
(21) Numéro de dépôt: 23174455.8
(22) Date de dépôt: 21.02.2020
(51) Int. Cl.: F21S 41/148, F21S 41/32, F21S 41/365, F21S 41/265, F21S 43/14, F21S 43/40, F21S 41/275, F21S 41/20, F21W 102/155, F21W 103/20, F21W 103/55, F21W 103/10

(54) **DISPOSITIF LUMINEUX IMAGEANT LES SURFACES ECLAIREES D'AU MOINS DEUX COLLECTEURS**
LEUCHTVORRICHTUNG, DIE DIE BELEUCHTETEN FLÄCHEN VON MINDESTENS ZWEI KOLLEKTOREN ABBILDET
LIGHTING DEVICE ILLUSTRATING THE LIT SURFACES OF AT LEAST TWO MANIFOLDS

(30) Priorité: 14.03.2019 FR 1902618
(43) Date de publication de la demande: 30.08.2023
(62) Demande divisionnaire de: 20158870.4
(73) Titulaire: Valeo Vision, 93012 Bobigny Cedex (FR)
(72) Inventeur: HERMITTE, Michel, 49000 ANGERS (FR); GIRAUD, Sylvain, 49000 ANGERS (FR)
(74) Mandataire: Valeo Visibility

(56) Documents cités:
- EP-A1- 1 500 869
- EP-A1- 2 182 272
- EP-A1- 2 565 530
- FR-A1- 3 038 695
- JP-A- 2011 100 583
- JP-A- 2017 016 784
- US-A1- 2011 170 310
- US-B2- 10 174 900

## Description

### Domaine technique

L'invention a trait au domaine de l'éclairage et de la signalisation lumineuse, plus particulièrement dans le domaine automobile.

### Technique antérieure

Le document de brevet publié FR 3 047 541 A1 divulgue un dispositif d'éclairage comprenant deux modules optiques disposés de manière opposée. Chacun de ces deux modules optiques comprend, essentiellement, une source lumineuse et un collecteur avec une surface réfléchissante. Ces deux sources lumineuses sont disposées sur deux faces opposées d'un support commun. Chacune des surfaces réfléchissantes est une surface de révolution dans un demi-espace délimité par le support commun des sources lumineuses. Les deux surfaces réfléchissantes forment ainsi deux demi-coquilles opposées l'une à l'autre. Un des deux modules optiques est configuré pour former un faisceau d'éclairage à coupure horizontale, correspondant à un faisceau dit « code » (en anglais « low-beam »). Pour ce faire, le dispositif comprend une surface réfléchissante avec un bord dit de « coupure » situé au niveau d'un foyer de la surface réfléchissante. Les rayons rencontrant la surface en question à l'arrière du bord de coupure sont réfléchis vers une partie supérieure d'une lentille de projection alors que ceux passant à l'avant du bord en question ne sont pas déviés et rencontrent une partie inférieure de la lentille en question. Ce phénomène assure une coupure, essentiellement horizontale, du faisceau. L'autre des deux modules optiques fonctionne essentiellement de la même manière, à cette différence près que le foyer de la surface réfléchissante est situé à l'avant du bord de coupure. Le faisceau produit par le deuxième module optique est combiné avec celui du premier système pour produire un faisceau d'éclairage du type « route » (en anglais « high-beam »), c'est-à-dire un faisceau sans coupure horizontale. Cette configuration est intéressante en ce qu'elle exploite le faisceau à coupure pour produire un faisceau du type « route ».

La demande de brevet FR 3 038 695 A1 décrit un dispositif d'éclairage selon l'art antérieur.

Un tel dispositif lumineux présente l'inconvénient de requérir une précision importante au niveau du positionnement de la plieuse et du bord de coupure. Aussi, la lentille de projection doit être une lentille épaisse en raison de sa faible distance focale, ce qui augmente son poids et complique sa production, comme notamment des défauts de retassures. De plus, le collecteur présente une certaine hauteur et, partant, un certain encombrement en hauteur.

### Exposé de l'invention

L'invention a pour objectif de pallier au moins un des inconvénients de l'état de la technique susmentionné. Plus particulièrement, l'invention a pour objectif de proposer un dispositif lumineux à plusieurs fonctions d'éclairage et/ou de signalisation qui soit compact et plus économique à produire.

L'invention a pour objet un dispositif lumineux selon les caractéristiques de la revendication 1, et un dispositif lumineux selon les caractéristiques de la revendication 3. En particulier l'invention porte sur un dispositif lumineux, notamment pour véhicule automobile, comprenant : une première et une deuxième source lumineuses aptes, chacune, à émettre des rayons lumineux ; un premier et un deuxième collecteurs avec, chacun, une surface réfléchissante configurée pour collecter et réfléchir les rayons lumineux émis, respectivement, par la première et la deuxième source lumineuse ; un système optique configuré pour projeter les rayons réfléchis par les surfaces réfléchissantes des premier et deuxième collecteur, respectivement, en un premier et un deuxième faisceau lumineux suivant un axe optique du dispositif ; remarquable en ce que le système optique est configuré pour former une image lumineuse de la surface réfléchissante de chacun des premier et deuxième collecteurs, chacun des premier et deuxième faisceaux forme, en partie ou en totalité, une fonction d'éclairage ou de signalisation qui est distincte de la fonction d'éclairage ou de signalisation de l'autre desdits premier et deuxième faisceaux.

Le dispositif lumineux forme un assemblage autonome en ce que chacun de ses composants, comme par exemple les sources lumineuses, les collecteurs et le système optique, est rigidement lié aux autres des composants, notamment via un support spécifique (non détaillé), et est ainsi positionné optiquement par rapport aux autres composants. Un ou plusieurs dispositifs lumineux peuvent ainsi être disposés dans un boîtier de projecteur afin de réaliser, le cas échéant en combinaison, toutes les fonctions réglementaires d'éclairage et de signalisation.

Avantageusement, le premier collecteur et la première source lumineuse sont disposés par rapport au deuxième collecteur et à la deuxième source lumineuse de manière à ce que l'image lumineuse de la surface réfléchissante du premier collecteur soit inversée, par rapport à l'axe optique, à l'image lumineuse de la surface réfléchissante du deuxième collecteur.

Selon un mode avantageux de l'invention, au moins un des premier et deuxième collecteurs est configuré pour que les rayons lumineux réfléchis par une partie arrière de la surface réfléchissante dudit collecteur soient parallèles à l'axe optique ou présentent, dans un plan vertical et par rapport audit axe, un angle d'inclinaison inférieur ou égal à 25°, préférentiellement inférieur ou égal à 10°.

Selon un mode avantageux de l'invention, les première et deuxième sources lumineuses sont configurées pour émettre dans une direction principale perpendiculaire à l'axe optique ou inclinée par rapport à une direction perpendiculaire audit axe optique inférieure ou égale à 25°. Avantageusement, les surfaces réfléchissantes des premier et deuxième collecteurs présentent un profil elliptique ou parabolique. De préférence, elle est une surface de révolution dudit profil. La révolution est autour d'un axe avantageusement parallèle à l'axe optique. Selon une variante, la surface réfléchissante est une surface de forme libre (en langue anglaise « free form ») ou une surface balayée ou une surface asymétrique. Elle peut aussi comporter plusieurs secteurs.

Selon l'invention, le système optique présente un premier foyer situé axialement en arrière d'une limite avant de la surface réfléchissante du premier collecteur, et/ou un deuxième foyer situé axialement en arrière d'une limite avant de la surface réfléchissante du deuxième collecteur.

Selon un mode avantageux de l'invention, le système optique est une lentille avec une première face d'entrée du premier faisceau lumineux et une deuxième face d'entrée du deuxième faisceau lumineux.

Selon un mode avantageux de l'invention, les première et deuxième faces d'entrées sont alignées perpendiculairement à l'axe optique.

Selon un mode avantageux de l'invention, la lentille présente une face de sortie commune aux première et deuxième faces d'entrée.

Selon un mode avantageux de l'invention, le premier collecteur et la première source lumineuse, d'une part, et le deuxième collecteur et la deuxième source lumineuse, d'autre part, sont disposés côte-à-côte.

Selon l'invention, la surface réfléchissante d'au moins un des premier et deuxième collecteurs est concave et présente, par rapport à une direction générale de propagation du faisceau lumineux correspondant, un bord avant et un bord arrière, lesdits bords délimitant dans des directions opposées l'image lumineuse correspondante.

Selon l'invention, ledit dispositif lumineux comprend, en outre, un miroir configuré pour former une image virtuelle d'au moins une des première et deuxième sources lumineuses et de la surface réfléchissante du premier et/ou deuxième collecteurs correspondants.

Selon un mode avantageux de l'invention, le miroir s'étend dans le prolongement de la surface réfléchissante du collecteur correspondant, ou le miroir s'étend le long de l'axe optique.

Selon un mode avantageux de l'invention, le premier collecteur et la première source lumineuse sont situés en-dessous de l'axe optique lorsque le dispositif est orienté en position fonctionnelle, le premier faisceau étant un faisceau d'éclairage à coupure horizontale supérieure réalisée par le bord arrière de la surface réfléchissante du premier collecteur.

Selon un mode avantageux de l'invention, le deuxième collecteur et la deuxième source lumineuse sont situés au-dessus de l'axe optique lorsque le dispositif est orienté en position fonctionnelle, le deuxième faisceau étant un faisceau d'éclairage avec une partie supérieure sans coupure horizontale, formée par une partie avant de la surface réfléchissante du deuxième collecteur.

Selon un mode avantageux de l'invention, la première et la deuxième source lumineuse sont disposées sur une platine commune.

Les mesures de l'invention sont intéressantes en ce qu'elles permettent de réaliser tout ou partie de plusieurs fonctions d'éclairage ou de signalisation distinctes avec un même dispositif présentant des avantages de compacité et de facilité d'assemblage en ce que la précision requise pour la mise en référence des différents composants est moins élevée que dans l'état de la technique. Plus particulièrement, le fait de produire une image de chacune des surfaces réfléchissantes éclairées est avantageux compte tenu que ces images présentent une concentration de lumière à proximité du bord arrière de ces surfaces réfléchissantes, permettant ainsi de concentrer la lumière au niveau de l'axe horizontal.

D'autres caractéristiques et avantages de la présente invention seront mieux compris à l'aide de la description et des dessins.

### Brève description des dessins

[Fig 1] est une représentation schématique d'un dispositif lumineux selon un premier mode de réalisation non couvert par l'invention.
[Fig 2] est une vue en perspective du collecteur supérieur du dispositif lumineux de la figure 1.
[Fig 3] est une vue de la surface intérieure éclairée du collecteur du dispositif lumineux de la figure 1, depuis l'extérieur suivant l'axe optique.
[Fig 4] est une représentation graphique des images lumineuses des faisceaux d'éclairage produits par le dispositif lumineux de la figure 1.
[Fig 5] est une représentation schématique d'une variante du dispositif lumineux selon le premier mode de réalisation et sortant du cadre de l'invention.
[Fig 6] est une représentation schématique d'un dispositif lumineux selon un deuxième mode de réalisation, couvert par l'invention.
[Fig 7] est une représentation schématique d'une variante du dispositif lumineux selon le deuxième mode de réalisation couvert par l'invention.
[Fig 8] est une représentation schématique d'un dispositif lumineux selon un troisième mode de réalisation couvert par l'invention.
[Fig 9] est une représentation schématique d'une variante du dispositif lumineux selon le troisième mode de réalisation couvert par l'invention.
[Fig 10] est une représentation schématique d'un dispositif lumineux selon un quatrième mode de réalisation non couvert par l'invention.
[Fig 11] est une représentation schématique d'une première variante du dispositif lumineux selon le quatrième mode de réalisation non couvert par l'invention.
[Fig 12] est une représentation schématique d'une deuxième variante du dispositif lumineux selon le quatrième mode de réalisation non couvert par l'invention.

### Description détaillée

Dans la description qui va suivre, les notions de « au-dessus » et « en-dessous » de l'axe optique sont à comprendre lorsque le dispositif lumineux est en position fonctionnelle, c'est-à-dire avec une orientation qui correspond à celle pour laquelle il a été conçu. Similairement, les notions « avant » et « arrière » sont à comprendre suivant la direction générale de la lumière, suivant l'axe optique du dispositif lumineux, lorsque le dispositif lumineux est en position fonctionnelle.

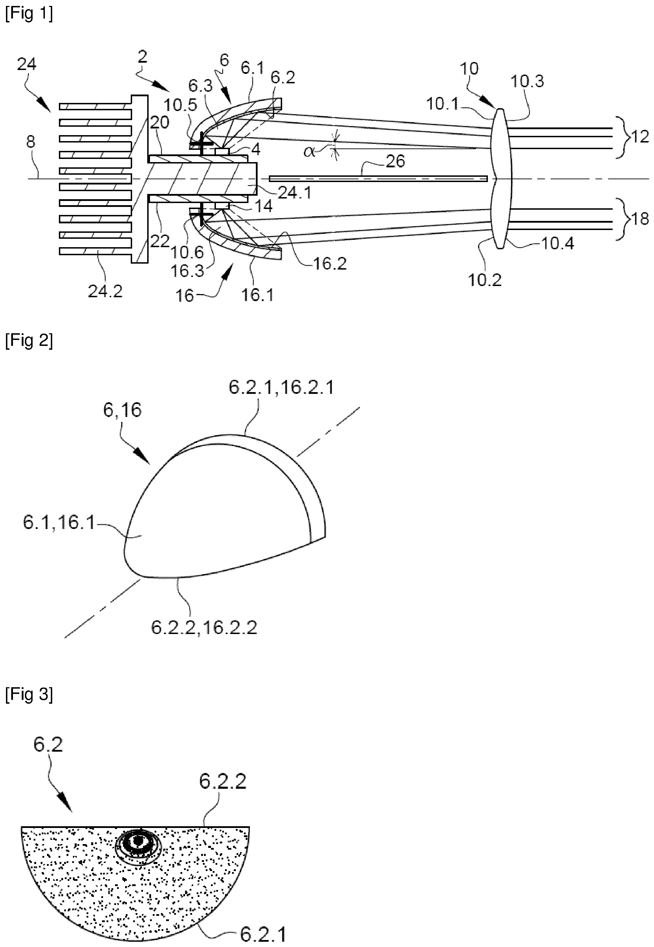

Les figures 1 à 4 illustrent un premier mode de réalisation d'un dispositif lumineux non couvert par l'invention.

La figure 1 est une représentation schématique du dispositif lumineux et de son principe de fonctionnement. Le dispositif lumineux 2 comprend, essentiellement, une première source lumineuse 4, un premier collecteur 6 apte à réfléchir les rayons lumineux émis par la première source lumineuse pour former un premier faisceau lumineux 12 suivant un axe optique 8 du dispositif, et une lentille de projection 10 dudit faisceau. D'autres systèmes optiques de projection que la lentille de projection sont envisageables, comme notamment un ou plusieurs miroirs. Le dispositif lumineux 2 comprend, en outre, une deuxième source lumineuse 14 opposée, par rapport à l'axe optique 8, à la première source lumineuse 4 et un deuxième collecteur 16 également opposé au premier collecteur 6 et apte à réfléchir les rayons lumineux émis par la deuxième source lumineuse 14 pour former un deuxième faisceau lumineux 18 suivant l'axe optique 8 du dispositif.

Les sources lumineuses 4 et 14 sont avantageusement du type à semi-conducteur, comme notamment une diode à électroluminescence. Chacune des sources lumineuses 4 et 14 émet des rayons lumineux dans un demi-espace délimité par le plan principal de ladite source, selon l'exemple représenté, dans une direction principale perpendiculaire audit plan et à l'axe optique 8. Selon l'invention, la direction principale d'émission pourra être inclinée par rapport à une direction perpendiculaire à l'axe optique d'un angle inférieur ou égal à 25°.

Chacun des collecteurs 6 et 16 comprend un support 6.1 et 16.1, en forme de coque ou calotte, et une surface réfléchissante 6.2 et 16.2 sur la face intérieure du support 6.1 et 16.1. Les surfaces réfléchissantes 6.2 et 16.2 présentent avantageusement un profil du type elliptique ou parabolique. Au moins une d'elles est avantageusement une surface de révolution autour d'un axe parallèle à l'axe optique. Alternativement, il peut s'agir d'une surface de forme libre (en langue anglaise « free form ») ou une surface balayée ou une surface asymétrique. Elle peut aussi comporter plusieurs secteurs. Les collecteurs 6 et 16 en forme de coque ou de calotte sont avantageusement réalisés dans des matériaux présentant une bonne tenue à la chaleur, par exemple du verre ou des polymères synthétiques comme du polycarbonate PC ou du polyétherimide PEI. L'expression « type parabolique » s'applique de manière générale à des réflecteurs dont la surface présente un seul foyer, c'est-à-dire une zone de convergence des rayons lumineux telle que les rayons lumineux émis par une source lumineuse placée au niveau de cette zone de convergence sont projetés à grande distance après réflexion sur la surface. Projeté à grande distance signifie que ces rayons lumineux ne convergent pas vers une zone située à au moins 10 fois les dimensions du réflecteur. Autrement dit les rayons réfléchis ne convergent pas vers une zone de convergence ou, s'ils convergent, cette zone de convergence est située à une distance supérieure ou égale à 10 fois les dimensions du réflecteur. Une surface de type parabolique peut donc présenter ou non des portions paraboliques. Un réflecteur présentant une telle surface est généralement utilisé seul pour créer un faisceau lumineux. Alternativement il peut être utilisé comme surface de projection associée à un réflecteur de type elliptique. Dans ce cas la source lumineuse du réflecteur de type parabolique est la zone de convergence des rayons réfléchis par le réflecteur de type elliptique.

Chacune des sources lumineuses 4 et 14 est disposée à un foyer de la surface réfléchissante correspondante 6.2 et 16.2 de manière à ce que ses rayons soient collectés et réfléchis suivant l'axe optique 8. Au moins une partie de ces rayons réfléchis présente des angles d'inclinaison α, dans un plan vertical, par rapport audit axe qui sont inférieurs ou égaux à 25°, de préférence inférieurs ou égaux à 10°, de manière à être dans les conditions dites de Gauss, permettant d'obtenir un stigmatisme, c'est-à-dire une netteté de l'image projetée. Il s'agit avantageusement des rayons réfléchis par la partie arrière de la surface réfléchissante 6.2 et 16.2.

La lentille de projection 10 présente une première face d'entrée 10.1 des rayons lumineux correspondant au premier faisceau lumineux 12, une deuxième face d'entrée 10.2 des rayons lumineux correspondant au deuxième faisceau lumineux 18, une première face de sortie 10.3 du premier faisceau lumineux 12 et une deuxième face de sortie 10.4 du deuxième faisceau lumineux 18. Les première et deuxième faces de sortie 10.3 et 10.4 forment avantageusement une face de sortie commune aux deux faces d'entrée 10.1 et 10.2. La lentille 10 est dite mince, par exemple avec une épaisseur, suivant l'axe optique du dispositif, qui est inférieure à 7mm, notamment en raison de la faible hauteur de lentille et de la longue focale de celle-ci. La lentille 10 peut présenter un premier foyer 10.5 et un deuxième foyer 10.6, le premier foyer 10.5 correspondant à la partie supérieure de la lentille 10 et le deuxième foyer 10.6 correspond à la partie inférieure de la lentille 10. Chacun des premier et deuxième foyers 10.5 et 10.6 en question est avantageusement situé sur une zone 6.3/16.3 située entre la surface réfléchissante 6.2/16.2 du premier ou deuxième collecteur 6/16 correspondant et la première ou deuxième source lumineuse 4/14 correspondante (ces zones sont délimitées par les traits interrompus). En l'occurrence au moins un des foyers peut être situé sur la surface réfléchissante 6.2/16.2 du premier ou deuxième collecteur 6/16 correspondant. Il est à noter qu'il est aussi possible que ce foyer soit situé à l'arrière ou à l'avant de la surface de réflexion 6.2/16.2 pour autant que ce soit à proximité, de préférence à moins de 10 mm, préférentiellement moins de 5 mm.

La surface réfléchissante, si elle est du type elliptique, présente un deuxième foyer situé à l'avant de la lentille 10 et à distance de l'axe optique 8. Il est à noter qu'il est aussi possible que ce foyer soit situé à l'arrière de la lentille et/ou sur l'axe optique, pour autant que ce soit à proximité de la lentille, de manière à réduire la largeur du faisceau au niveau de la face d'entrée de la lentille.

Toujours en référence à la figure 1, on peut observer que la première source lumineuse 4 et le premier collecteur 6, d'un part, et la deuxième source lumineuse 14 et le deuxième collecteur 16, d'autre part, sont opposés par rapport à l'axe optique 8. En particulier, la première source lumineuse 4 est disposée sur une première platine 20 et la deuxième source lumineuse 14 est disposée sur une deuxième platine 22 distincte et distante de la première platine 20. Un dissipateur de chaleur 24 est thermiquement couplé aux première et deuxième sources lumineuses 4 et 16 via une portion 24.1 servant de support aux première et deuxième platines 20 et 22. Le dissipateur de chaleur 24 comprend également une partie dissipatrice 24.2 avec des ailettes de refroidissement. Cette disposition est particulièrement intéressante d'un point de vue thermique. Il est toutefois entendu qu'il est également possible que les première et deuxième sources lumineuses soient disposées sur des faces opposées d'une platine commune.

Le dispositif lumineux comprend avantageusement un écran absorbant 26 s'étendant de long de l'axe optique 8 qui est situé entre les premier et deuxième collecteurs 6 et 16 et la lentille 10, de manière à absorber les éventuels rayons lumineux qui le rencontrent et ainsi éviter des réflexions parasites.

Encore en référence à la figure 1, le premier faisceau lumineux 12 est avantageusement un faisceau d'éclairage à coupure horizontale supérieure (c'est-à-dire du type « code » ou « low-beam ») et le deuxième faisceau lumineux 18 est avantageusement un faisceau d'éclairage sans coupure (c'est-à-dire, en combinaison avec le premier faisceau lumineux 12, du type « route » ou « high-beam »).

La figure 2 est une vue arrière, en perspective, d'un des premier et deuxième collecteurs 6 et 16 du dispositif lumineux 2 de la figure 1, orienté cependant comme le premier collecteur. On peut observer la forme de coquille ou calotte du support 6.1/16.1, ainsi que le fait que la surface réfléchissante (non visible) présente un bord avant 6.2.1/16.2.1 et un bord arrière 6.2.2/16.2.2. Compte-tenu du fait que le support 6.1/16.1 et, par voie de conséquence, la surface réfléchissante 6.2/16.2 forme une coque préférentiellement symétrique en révolution et délimitée par un plan, le plan en question comprend le bord arrière 6.2.2/16.2.2. Celui-ci s'étend dans le plan latéralement de part et d'autre de l'axe de révolution. Lorsque la surface réfléchissante 6.2/16.2 est éclairée par la source lumineuse, elle est alors illuminée sur la totalité de sa surface, celle-ci étant délimitée par les bords avant 6.2.1/16.2.1 et arrière 6.2.2/16.2.2.

La figure 3 est une représentation de l'intensité lumineuse au niveau de la surface réfléchissante 6.2 du premier collecteur vue depuis l'extérieur, suivant l'axe optique. Plus spécifiquement, l'éclairement de la surface, à savoir la puissance du rayonnement électromagnétique frappant par unité de surface perpendiculaire à sa direction, exprimée en W/m². La zone foncée couvrant la majorité de la surface, correspond à des éclairements plus faibles alors que la zone centrale, plus claire, correspond à des éclairements plus grands. On peut observer que la zone foncée est délimitée de manière nette par les bords 6.2.1 et 6.2.2. En d'autres termes, la surface éclairée 6.2 présente naturellement des bords nets aptes à former des coupures dans le faisceau d'éclairage projeté imageant cette surface. Le même raisonnement s'applique au deuxième collecteur à cette différence près que la distribution d'intensité lumineuse est tournée de 180° autour de l'axe optique.

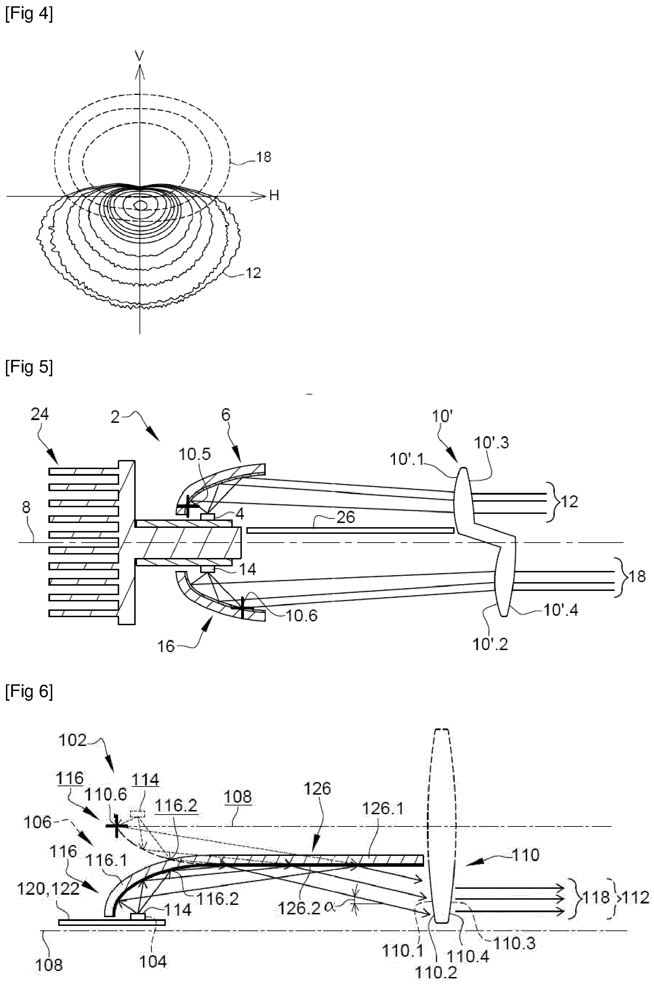

La figure 4 est une représentation graphique des images projetées par le dispositif lumineux de la figure 1. L'axe horizontal H et l'axe vertical V se croisent au niveau de l'axe optique du dispositif lumineux. Les courbes en trait continu correspondent au premier faisceau lumineux 12 et la courbes en trait interrompu correspondent au deuxième faisceau lumineux 18. Ces courbes sont des isolux, c'est-à-dire correspondent aux zones du faisceau lumineux qui présentent un même éclairement exprimé en lux. Les courbes au centre correspondent à un niveau d'éclairement plus élevé qu'à la périphérie.

On peut observer à la figure 4 que le premier faisceau lumineux 12 présente une coupure horizontale supérieure, essentiellement au niveau de l'axe horizontal H. La coupure n'est pas parfaitement droite ; elle présente une courbure qui correspond à des aberrations de l'image ainsi produite. En tout état de cause, la coupure horizontale est réalisée par le bord 6.2.2 (figure 3) qui est le bord arrière (figure 2) de la surface réfléchissante 6.2 du premier collecteur 6. A cet effet, le premier foyer 10.5 de la lentille 10 (figure 1) est situé à proximité de ce bord 6.2.2 (figure 3), c'est-à-dire à l'arrière de la première source lumineuse 4. On peut également observer que le faisceau lumineux produit présente, sous l'axe horizontal, un contour net correspondant au bord avant 6.2.1.

Toujours à la figure 4, on peut observer que le deuxième faisceau lumineux 18 correspond essentiellement à un retournement du premier faisceau lumineux 12 et concentre de la lumière au niveau de l'axe horizontal H et au-dessus dudit axe de manière à bien compléter le premier faisceau lumineux 12. Cette concentration de lumière dans la partie haute du deuxième faisceau est réalisée par la partie de la surface réfléchissante 16.2 qui est à proximité du bord arrière 16.2.2. A cet effet, le deuxième foyer 10.6 de la lentille 10 (figure 1) est situé à proximité du bord arrière 16.2.2 (figure 2).

La figure 5 est une représentation schématique d'une variante du dispositif lumineux 2 du premier mode de réalisation, illustré à la figure 1, et sortant du cadre de l'invention. Cette variante de se distingue de la figure 1 en ce que la lentille 10' ne présente plus de face de sortie commune mais bien des faces de sorties distinctes. En l'occurrence on peut observer que la deuxième face d'entrée 10'.2 et la deuxième face de sortie 10'.4 sont décalées axialement par rapport aux premières faces d'entrée 10'.1 et de sortie 10'.3. Plus particulièrement ce décalage est tel que les deuxièmes faces d'entrée 10'.2 et de sortie 10'.4 sont davantage éloignées des premier et deuxième collecteurs 6 et 16 que les premières faces d'entrée 10'.1 et de sortie 10'.3. Cela permet notamment de répondre à des contraintes d'encombrement.

La figure 6 est une vue schématique d'un dispositif lumineux selon un deuxième mode de réalisation, couvert par l'invention. Les numéros de référence du premier mode de réalisation sont utilisés pour désigner les éléments identiques ou correspondants, ces numéros étant toutefois majorés de 100. Il est par ailleurs fait référence à la description de ces éléments dans le cadre du premier mode de réalisation. Des numéros spécifiques compris entre 100 et 200 sont utilisés pour désigner les éléments spécifiques à ce mode de réalisation.

Dans ce dispositif lumineux 102, la deuxième source lumineuse 114 et le deuxième collecteur 116 ne sont plus opposés, par rapport à l'axe optique du dispositif, à la première source lumineuse 104 et au premier collecteur 106 mais bien situés à côté de ceux-ci. La première source lumineuse 104 et le premier collecteur 106 ne sont pas visibles car situés derrière la deuxième source lumineuse 114 et le deuxième collecteur 116. Le dispositif lumineux 102 comprend, en outre, un miroir 126 disposé dans le prolongement de la surface réfléchissante 116.2 du collecteur 116. Le miroir 126 comprend un support 126.1 et une surface réfléchissante plane 126.2 formée sur le support 126.1. Ce dernier peut être confondu ou adjacent au support 116.1 du collecteur 116. La source lumineuse 114 est disposée à un foyer de la surface réfléchissante 116.2 du collecteur 116 de manière à ce que ses rayons soient collectés et réfléchis vers le miroir 126. Ce dernier réfléchit vers la lentille de projection 110 une image virtuelle 116.2 de la surface réfléchissante 116.2, une image virtuelle 116 du deuxième collecteur 116 et une image virtuelle 114 de la source lumineuse 114, représentées en trait interrompu à la figure 6. Similairement au premier mode de réalisation, au moins une partie de ces rayons réfléchis par le miroir 126 présente des angles d'inclinaison α, dans un plan vertical et par rapport audit axe, qui sont inférieurs ou égaux à 25°, de préférence inférieurs ou égaux à 10°, de manière à être dans les conditions dites de Gauss, permettant d'obtenir un stigmatisme, c'est-à-dire une netteté de l'image projetée. Il s'agit avantageusement des rayons réfléchis par la partie arrière de la surface réfléchissante 116.2 du deuxième collecteur 116.

La lentille 110 présente alors deux parties distinctes pour les premier et deuxième faisceaux 112 et 118, ces deux parties étant côte-à-côte et non plus de part et d'autre de l'axe optique comme dans le premier mode de réalisation. La lentille 110 présente alors une première face d'entrée 110.1 et une première face de sortie 110.3 pour former le premier faisceau 112 et une deuxième face d'entrée 110.2 et une deuxième face de sortie 110.4 pour former le deuxième faisceau 118. Il est toutefois à noter que les deux faces de sortie 110.3 et 110.4 peuvent former une face de sortie commune comme à la figure 1 ou encore des faces de sortie distinctes et potentiellement décalées axialement comme à la figure 5.

Il est aussi à noter que la deuxième partie de la lentille, à savoir celle avec les deuxièmes faces d'entrée et de sortie 110.2 et 110.4, est avantageusement du type biconvexe symétrique par rapport à l'axe optique virtuel 108 (en trait interrompu) situé au-dessus de l'axe optique 108. Cette partie de la lentille présente un foyer 110.6 situé sur cet axe virtuel et à proximité d'un bord arrière de la surface réfléchissante du collecteur virtuel. Cela permet à cette partie de la lentille 110 d'imager la surface éclairée du deuxième collecteur 116 similairement au premier mode de réalisation de l'invention.

La configuration qui vient d'être décrite est intéressante notamment pour des applications présentant des contraintes d'encombrement vers le bas.

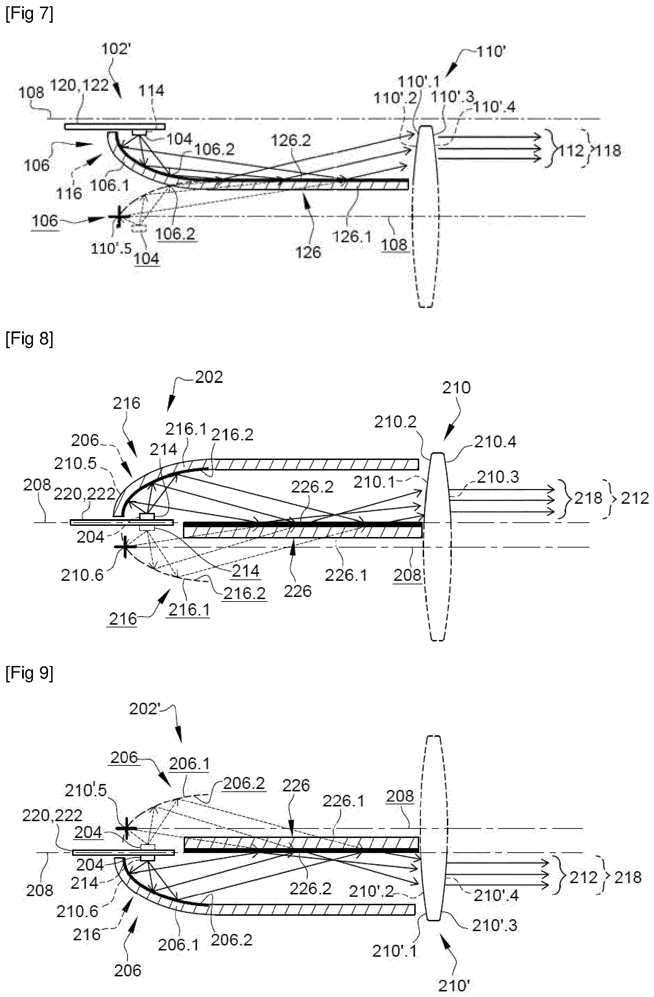

La figure 7 est une représentation schématique d'une variante du dispositif lumineux 102 du deuxième mode de réalisation de l'invention, illustré à la figure 6. Le dispositif lumineux 102' selon cette variante se distingue de la figure 6 en ce que ce n'est plus la deuxième source lumineuse 114 et le deuxième collecteur 116 qui sont retournés autour de l'axe optique 108 mais bien la première source lumineuse 104 et le premier collecteur 106. De manière similaire, la source lumineuse 104 est disposée à un foyer de la surface réfléchissante 106.2 du premier collecteur 106 de manière à ce que ses rayons soient collectés et réfléchis vers le miroir 126. Ce dernier réfléchit vers la lentille de projection 110 une image virtuelle 106.2 de la surface réfléchissante 106.2 du premier collecteur 106 et une image virtuelle 104 de la source lumineuse 104, représentées en trait interrompu à la figure 6. En d'autres termes, cette inversion permet d'obtenir deux faisceaux lumineux opposés (12 & 18) à partir de sources lumineuses qui ont une même orientation. La première source lumineuse 104 et le premier collecteur 106 peuvent ainsi, malgré le retournement, produire un faisceau lumineux similaire au premier faisceau lumineux 12 du premier mode de réalisation, illustré la figure 4, c'est-à-dire avec une concentration de lumière à sa partie haute, en l'occurrence au niveau de l'axe horizontal.

Les première faces d'entrée et de sortie 110'.1 et 110'.3 de la lentille 110' sont visibles, les deuxièmes faces d'entrée de sortie 110'.3 et 110'.4 n'étant elles pas visibles. La première partie de la lentille 110' est alors, similairement à la deuxième partie de la lentille de la figure 6, avantageusement du type biconvexe symétrique par rapport l'axe optique virtuel (en trait interrompu) situé au-dessous de l'axe optique 108. Cette partie de la lentille présente un foyer 110'.5 situé sur cet axe virtuel et à proximité d'un bord arrière de la surface réfléchissante du collecteur virtuel.

Similairement, la configuration qui vient d'être décrite est intéressante notamment pour des applications présentant des contraintes d'encombrement vers le haut.

La figure 8 est une vue schématique d'un dispositif lumineux sont un troisième mode de réalisation, couvert par l'invention. Les numéros de référence des premier et deuxième modes de réalisation sont utilisés pour désigner les éléments identiques ou correspondants, ces numéros étant toutefois majorés de 200 et 100, respectivement. Il est par ailleurs fait référence à la description de ces éléments dans le cadre des premier et deuxième modes de réalisation. Des numéros spécifiques compris entre 200 et 300 sont utilisés pour désigner les éléments spécifiques à ce mode de réalisation.

Ce troisième mode de réalisation présente une similitude avec le deuxième mode (figure 6) en ce que dans ce dispositif lumineux 202, la deuxième source lumineuse 214 et le deuxième collecteur 216 ne sont plus opposés, par rapport à l'axe optique du dispositif, à la première source lumineuse 204 et au premier collecteur 206 mais bien situés à côté de ceux-ci. La première source lumineuse 204 et le premier collecteur 206 ne sont pas visibles car situés derrière la deuxième source lumineuse 214 et le deuxième collecteur 216. Le dispositif 202 comprend un miroir 226 pourvu d'un support 226.1 et d'une surface réfléchissante 226.2 avantageusement plane. Le miroir 226 et plus particulièrement la surface réfléchissante 226.2 s'étendent le long de l'axe optique 208. Ils sont avantageusement parallèles audit axe, étant toutefois entendu que des variantes où ceux-ci sont légèrement inclinés, par exemple jusqu'à 20° ou 10° d'inclinaison, sont envisageables. La surface réfléchissante 216.2 du deuxième collecteur 216 est configurée pour réfléchir les rayons émis par la deuxième source lumineuse 214 vers la surface réfléchissante 226.2. Celle-ci réfléchit alors ces rayons sous la forme d'une image virtuelle 214 de la deuxième source lumineuse 214 et une image virtuelle 216.2 de la surface réfléchissante 216.2 du deuxième collecteur 216, ces images virtuelles (en trait interrompu) étant situées sous l'axe optique 208. En d'autres termes, le dispositif 202 va produire une image lumineuse inversée de la surface éclairée du deuxième collecteur 216, correspondant à l'image virtuelle 216 du collecteur 216 (représentée en trait interrompu) et située majoritairement au-dessus de l'axe horizontal tout en ayant une concentration de lumière en partie basse, au niveau dudit axe.

Similairement au deuxième mode de réalisation, la lentille 210 présente alors deux parties distinctes pour les premier et deuxième faisceaux 212 et 218, ces deux parties étant côte-à-côte et non plus de part et d'autre de l'axe optique comme dans le premier mode de réalisation. La lentille 210 présente alors une première face d'entrée 210.1 et une première face de sortie 210.3 pour former le premier faisceau 212 et une deuxième face d'entrée 210.2 et une deuxième face de sortie 210.4 pour former le deuxième faisceau 218. Il est toutefois à noter que les deux faces de sortie 210.3 et 210.4 peuvent former une face de sortie commune comme à la figure 1 ou encore des faces de sortie distinctes et potentiellement décalées axialement comme à la figure 5.

Il est aussi à noter que la deuxième partie de la lentille, à savoir celle avec les deuxièmes faces d'entrée et de sortie 210.2 et 210.4, est avantageusement du type biconvexe symétrique par rapport l'axe optique virtuel (en trait interrompu) situé sous l'axe optique 208. Cette partie de la lentille présente un foyer 210.6 situé sur cet axe virtuel 208 et à proximité d'un bord arrière de la surface réfléchissante du collecteur virtuel. Cela permet à cette partie de la lentille 210 d'imager la surface éclairée du deuxième collecteur 216 similairement au premier mode de réalisation de l'invention.

La figure 9 est une représentation schématique d'une variante du dispositif lumineux 202 du troisième mode de réalisation de l'invention, illustré à la figure 8. Le dispositif lumineux 202' selon cette variante se distingue de la figure 8 en ce que ce n'est plus la deuxième source lumineuse 214 et le deuxième collecteur 216 qui sont retournés autour de l'axe optique 208 mais bien la première source lumineuse 204 et le première collecteur 206. De manière similaire, la surface réfléchissante 206.2 du premier réflecteur est configurée pour réfléchir les rayons lumineux émis par la première source lumineuse 204 vers la surface réfléchissante 226.2 avantageusement plane de l'écran réfléchissant 226. Cette surface réfléchissante 206.2 réfléchit alors les rayons lumineux vers la lentille 210', plus exactement vers la première partie de la lentille 210', correspondant aux premières faces d'entrée 210'.1 et de sortie 210'.3, provoquant ainsi une inversion de l'image lumineuse, comme si elle était produite par le collecteur virtuel 206 et la source lumineuse virtuelle 204 illustrés en trait interrompu. En d'autres termes, cette inversion permet d'annuler l'inversion provoquée par le retournement vers le bas de la première source lumineuse 204 et du premier collecteur 206. Ceux-ci peuvent ainsi, malgré le retournement, produire un faisceau lumineux similaire au premier faisceau lumineux 12 du premier mode de réalisation, illustré la figure 4, c'est-à-dire avec une concentration de lumière à sa partie haute, en l'occurrence au niveau de l'axe horizontal.

Les première faces d'entrée 210'.1 et de sortie 210'.3 de la lentille 210' sont visibles, les deuxièmes faces d'entrée 210'.3 et de sortie 210'.4 n'étant elles pas visibles. La première partie de la lentille 210' est alors, similairement à la deuxième partie de la lentille de la figure 8, avantageusement du type biconvexe symétrique par rapport l'axe optique virtuel 208 (en trait interrompu) situé au-dessus de l'axe optique 208. Cette partie de la lentille présente un foyer 210'.5 situé sur cet axe virtuel et à proximité d'un bord arrière de la surface réfléchissante du collecteur virtuel.

Similairement, la configuration qui vient d'être décrite est intéressante notamment pour des applications présentant des contraintes d'encombrement vers le haut.

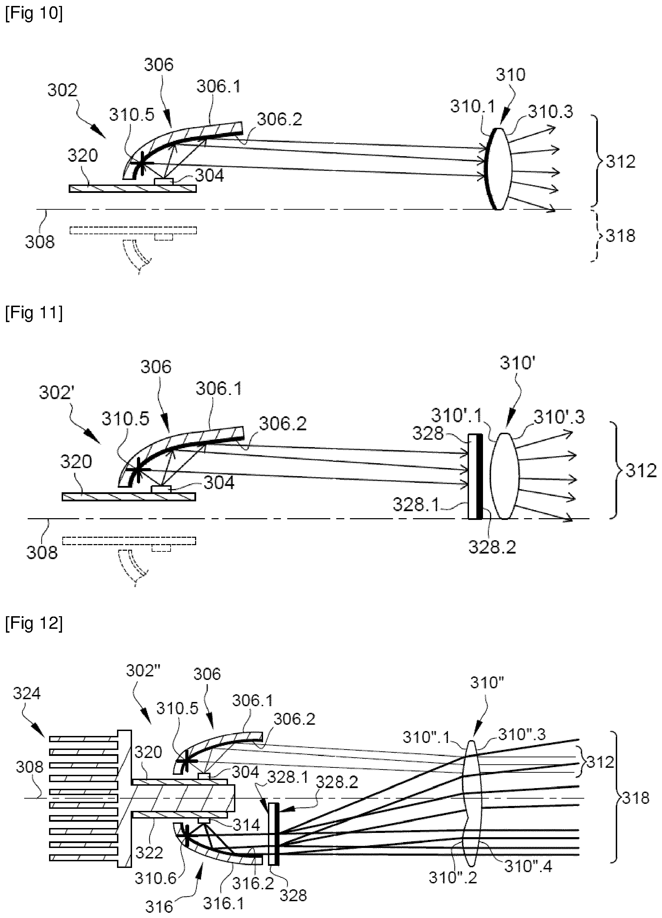

La figure 10 est une vue schématique d'un dispositif lumineux sont un quatrième mode de réalisation, sortant du cadre de l'invention. Les numéros de référence du premier mode de réalisation sont utilisés pour désigner les éléments identiques ou correspondants, ces numéros étant toutefois majorés de 300. Il est par ailleurs fait référence à la description de ces éléments dans le cadre du premier mode de réalisation. Des numéros spécifiques compris entre 300 et 400 sont utilisés pour désigner les éléments spécifiques à ce mode de réalisation.

Le dispositif lumineux 302 de la figure 10 se distingue du dispositif lumineux du premier mode de réalisation à la figure 1, essentiellement en ce qu'un des faisceaux lumineux est un faisceau de signalisation lumineuse. Dans le premier mode de réalisation, les premier et deuxième faisceaux lumineux 12 et 18 sont en effet avantageusement des faisceaux d'éclairage, en l'occurrence à coupure horizontale (fonction « code » ou « low beam » en anglais) et sans coupure (fonction complémentaire « route » ou encore « high-beam » en anglais). Dans le cas de la figure 10, le premier faisceau lumineux 312 est un faisceau de signalisation lumineuse. A cet effet, un grainage est prévu sur la première face d'entrée 310.1 de la lentille. La première source lumineuse 304, le premier collecteur 306 et la première partie de la lentille 310, correspondant aux première faces d'entrée 310.1 et de sortie 310.3, forment ainsi un première faisceau lumineux 312 diffusant. La deuxième source lumineuse, le deuxième collecteur et la deuxième partie de la lentille sont similaires à l'un des premier, deuxième et troisième modes de réalisation. Il est ainsi entendu que le deuxième faisceau lumineux peut être avec ou sans coupure et que la deuxième source lumineuse et le deuxième collecteur peuvent être situé au-dessus ou en-dessous de l'axe optique 308.

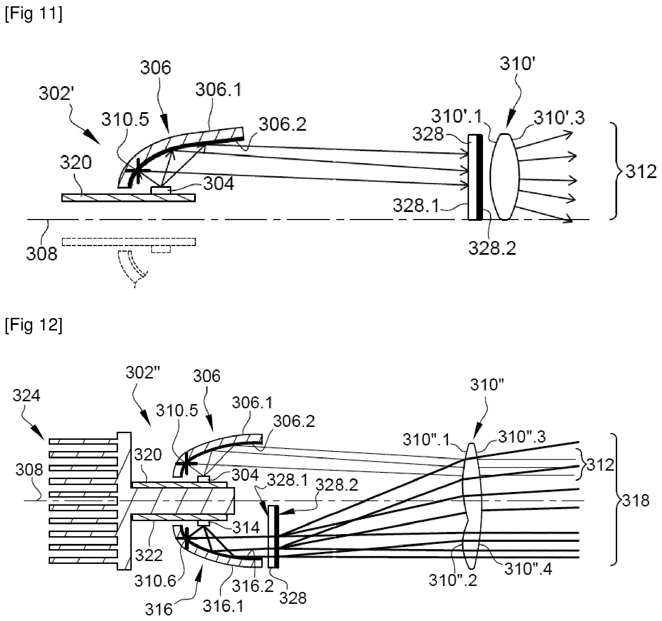

La figure 11 illustre une première variante du quatrième mode de réalisation de la figure 10. Le dispositif lumineux 302' selon cette variante présente un grainage qui, au lieu d'être sur la face d'entrée correspondante de la lentille, est situé sur au moins une des faces d'entrée 328.1 et de sortie 328.2 d'une lentille intermédiaire 328 située optiquement entre le premier collecteur 306 et la lentille principale 310. Les rayons lumineux réfléchis par la surface réfléchissante 306.1 du premier collecteur 306 traversent la lentille intermédiaire avant d'atteindre la lentille principale 310. Ils sont diffusés avantageusement au travers du dioptre formé par la face de sortie grainée 328.2 de la lentille intermédiaire.

La figure 12 illustre une deuxième variante du quatrième mode de réalisation de la figure 10. Le dispositif lumineux 302" selon cette variante est illustré de manière complète, c'est-à-dire avec, d'un côté de l'axe optique 308, en l'occurrence au-dessus, la première source lumineuse 304 et le premier collecteur 306, et d'un autre côté de l'axe optique, en l'occurrence en dessous, la deuxième source lumineuse 314 et le deuxième collecteur 316. Similairement à la première variante de la figure 11, une lentille intermédiaire 328 est prévue. En l'occurrence elle est disposée optiquement entre le deuxième collecteur 316 et la lentille principale 310". Plus spécifiquement encore, la lentille intermédiaire 328 est disposée à proximité du deuxième collecteur 316, en tout état de cause à distance de la lentille principale 310" de manière à diffuser le deuxième faisceau lumineux non seulement vers la deuxième face d'entrée 310".3 de la lentille 310 mais également vers la première face d'entrée 310".1. Le deuxième faisceau lumineux diffusant 318 vient ainsi en superposition du premier faisceau 312, en l'occurrence d'éclairage et préférentiellement à coupure horizontale.

A la lumière de ces différents modes de réalisation et de leurs variantes, on comprend que diverses combinaisons de faisceaux lumineux d'éclairage et/ou de signalisation sont possibles sur un même dispositif lumineux. En particulier, le nombre de sources lumineuses et de collecteurs correspondants n'est pas limité à deux. Il est en effet envisageable de prévoir d'avantage de sources lumineuses et de collecteurs correspondant. Comme cela a déjà été mis en avant avec les modes de réalisation décrits ci-avant les différents lumineux produits par les différents couples de source lumineuse et de collecteur peuvent se juxtaposer et/ou se superposer. A la variante du troisième mode de réalisation, à la figure 12, le deuxième faisceau produit par la source lumineuse et le collecteur situés en-dessous de l'axe optique, ledit faisceau étant en l'occurrence diffusant, se superpose, du moins en partie, au premier faisceau lumineux. Aussi, chacune des première, deuxième sources lumineuses et éventuellement des sources lumineuses additionnelles peut être constituée de plusieurs zones lumineuses activables de manière discrétionnaire et émettant des rayons lumineux vers le collecteur correspondant.

De manière non-exhaustive, les différentes combinaisons suivantes sont possibles sur un même dispositif lumineux, notamment en prévoyant davantage de collecteurs et de sources lumineuses associées auxdits collecteurs :
- Un premier faisceau lumineux sous la forme d'un premier faisceau d'éclairage à coupure horizontale formant une partie d'une première fonction d'éclairage, un deuxième faisceau lumineux sous la forme d'un deuxième faisceau d'éclairage avec une coupure à ressaut formant une autre partie de cette même première fonction d'éclairage, un troisième faisceau lumineux sous la forme d'un troisième faisceau d'éclairage sans coupure formant tout ou partie d'une deuxième fonction d'éclairage.
   Par exemple, le premier faisceau d'éclairage peut être un faisceau à coupure horizontale (appelé « flat » en anglais) formant une partie d'une fonction de feu de croisement, le deuxième faisceau d'éclairage peut être un faisceau avec une coupure à ressaut (appelé « kink » en anglais) formant une deuxième partie d'une fonction de feu de croisement, la superposition du premier faisceau d'éclairage et du deuxième faisceau d'éclairage formant une fonction de feu de croisement. Et, le troisième faisceau d'éclairage peut former une partie d'une fonction de feu de route, appelée fonction feu de route complémentaire et qui forme une fonction de feu de route lorsqu'il est superposé aux premier et deuxième faisceaux d'éclairage.
   Alternativement, le troisième faisceau lumineux peut être un troisième faisceau d'éclairage sous la forme d'un segment lumineux formant une partie d'une deuxième fonction d'éclairage, et le dispositif lumineux émet plusieurs faisceaux lumineux supplémentaires sous la forme de segment lumineux formant une partie de cette deuxième fonction d'éclairage, chacun des segments lumineux étant sélectivement activable.
   Par exemple, le segment lumineux formé par le troisième faisceau d'éclairage forme une partie d'une fonction de feu de route et la superposition de l'ensemble des segments lumineux formés par le troisième faisceau d'éclairage et par les faisceaux lumineux supplémentaire avec les premier et deuxième faisceaux d'éclairage forme une fonction de feu de route.
   Dans chacune des alternatives ci-dessus, le dispositif lumineux (2 ; 102 ; 202 ; 302) peut également émettre un faisceau lumineux additionnel sous la forme d'un faisceau d'éclairage ou de signalisation.
- Un premier faisceau lumineux sous la forme d'un faisceau d'éclairage sans coupure formant une première fonction d'éclairage, un deuxième faisceau lumineux sous la forme d'un faisceau de signalisation formant une fonction de signalisation.
   Par exemple, le faisceau d'éclairage peut former une fonction de feu de route et le faisceau de signalisation peut former une fonction de signalisation prise parmi une fonction d'indicateur de direction, une fonction de feu de jour et une fonction de feu de position.
   Alternativement, le premier faisceau lumineux peut être sous la forme d'un premier faisceau d'éclairage à coupure horizontale formant une partie d'une première fonction d'éclairage, et le dispositif peut émettre un troisième faisceau lumineux sous la forme d'un deuxième faisceau d'éclairage avec une coupure à ressaut formant une autre partie de cette même première fonction d'éclairage Par exemple, le premier faisceau d'éclairage peut être un faisceau à coupure horizontale (appelé « flat » en anglais) formant une partie d'une fonction de feu de croisement et le deuxième faisceau d'éclairage peut être un faisceau avec une coupure à ressaut (appelé « kink » en anglais) formant une deuxième partie d'une fonction de feu de croisement, la superposition du premier faisceau d'éclairage et du deuxième faisceau d'éclairage formant une fonction de feu de croisement.
   Le dispositif lumineux (2 ; 102 ; 202 ; 302) émet alors un faisceau à coupure horizontal, un faisceau à coupure à ressaut et un faisceau de signalisation.
   Il est également possible, pour chacune des alternatives, que le dispositif lumineux (2 ; 102 ; 202 ; 302) émette un faisceau lumineux additionnel sous la forme d'un deuxième faisceau de signalisation. Par exemple, ce deuxième faisceau de signalisation peut former une fonction de signalisation prise parmi une fonction d'indicateur de direction, une fonction de feu de jour et une fonction de feu de position.

De plus, les sources lumineuses d'une part et les collecteurs associés d'autre part peuvent être disposés côté-à-côte. Alternativement, une partie des sources lumineuses et leur collecteur associé peuvent être opposés à l'autre partie des sources lumineuses et leur collecteur associé, par rapport à l'axe optique.

Selon une variante, on peut avoir l'ensemble des collecteurs disposés côte-à-côte.

Par exemple, dans sa position fonctionnelle, le dispositif lumineux peut ainsi comprendre un collecteur participant à la formation d'un faisceau d'éclairage à coupure horizontale, un collecteur participant à la formation d'un faisceau avec une coupure à ressaut et un collecteur participant à la formation d'une faisceau lumineux formant une partie de fonction de feu de route disposés côte-à-côte.

Selon une autre variante, on peut avoir une première et une deuxième sources lumineuses associées respectivement à un premier et un deuxième collecteurs opposés par rapport à l'axe optique à une troisième source lumineuse et au troisième collecteur auquel est associé la troisième source.

Par exemple, dans sa position fonctionnelle, le dispositif lumineux peut comprendre un premier collecteur et un deuxième collecteur participant respectivement à la formation d'un faisceau d'éclairage à coupure horizontale et d'un faisceau avec une coupure à ressaut au-dessus de l'axe optique, et un troisième collecteur participant à la formation d'un faisceau lumineux formant une partie de fonction de feu de route au-dessous de l'axe optique.

Dans un autre exemple, dans sa position fonctionnelle, le dispositif lumineux peut comprendre un premier collecteur et un deuxième collecteur participant respectivement à la formation d'une fonction d'éclairage et d'une fonction de signalisation au-dessus de l'axe optique et un troisième collecteur participant à la formation d'un faisceau lumineux formant tout ou partie d'une fonction de signalisation au-dessous de l'axe optique.

Selon une autre variante, on peut avoir une première source lumineuse associée à un premier collecteur, opposés par rapport à l'axe optique à une deuxième source lumineuse et au deuxième collecteur auquel est associée la deuxième source.

Par exemple, dans sa position fonctionnelle, le dispositif lumineux peut ainsi comprendre un premier collecteur participant à la formation d'un faisceau d'éclairage sans coupure formant une première fonction d'éclairage au-dessus de l'axe optique, et un deuxième collecteur participant à la formation d'un faisceau de signalisation au-dessous de l'axe optique.

## Revendications

1. Dispositif lumineux (102' ; 202') pour véhicule automobile comprenant :
- une première source lumineuse (104 ; 204) et une deuxième source lumineuse (114 ; 214) aptes, chacune, à émettre des rayons lumineux ;
- un premier collecteur (106 ; 206) et un deuxième collecteur (116 ; 216) avec, chacun, une surface réfléchissante (106.2, 116.2 ; 206.2, 216.2) concave configurée pour collecter et réfléchir les rayons lumineux émis, respectivement, par la première (104 ; 204) et la deuxième (114 ; 214) source lumineuse ;
- un système optique (110' ; 210') configuré pour projeter les rayons lumineux réfléchis par les surfaces réfléchissantes (106.2, 116.2 ; 206.2, 216.2) des premier (106 ; 206) et deuxième (116 ; 216) collecteurs, respectivement, en un premier faisceau lumineux (112 ; 212) et en un deuxième faisceaux lumineux (118 ; 218) suivant un axe optique du dispositif (108 ; 208) ;
le système optique (110' ; 210') étant configuré pour former une image lumineuse de la surface réfléchissante (106.2, 116.2 ; 206.2, 216.2) de chacun des premier (106 ; 206) et deuxième (116 ; 216) collecteurs, les surfaces réfléchissantes (106.2, 116.2 ; 206.2, 216.2) présentant, par rapport à une direction générale de propagation du faisceau lumineux correspondant, un bord avant et un bord arrière, lesdits bords délimitant dans des directions opposées l'image lumineuse correspondante, et
chacun des premier (112 ; 212) et deuxième (118 ; 218) faisceaux lumineux formant, une partie ou la totalité d'une fonction d'éclairage ou de signalisation qui est distincte de la fonction d'éclairage ou de signalisation de l'autre desdits premier et deuxième faisceaux
**caractérisé en ce que** :
- le système optique (110' ; 210') présente un premier foyer (110'.5 ;210'.5) situé axialement en arrière d'une limite avant de la surface réfléchissante (106.2 ; 206.2) du premier collecteur (106 ; 206), et un deuxième foyer (110.6 ; 210.6) situé axialement en arrière d'une limite avant de la surface réfléchissante (116.2 ; 216.2) du deuxième collecteur (116 ; 216) ;
- le dispositif lumineux comprend, en outre, un miroir (126 ; 226), la surface réfléchissante (106.2 ; 206.2) du premier collecteur (106 ; 206) étant configurée pour collecteur et réfléchir les rayons lumineux émis par la première source lumineuse (104 ; 204) vers ledit miroir (126 ; 226),
et ledit miroir (126 ;216) étant configuré pour former une image virtuelle (104, 106.2 ; 204, 206.2) de la première source lumineuse (104 ; 204) et de la surface réfléchissante du premier collecteur (106 ; 206),
le système optique (110' ; 210') formant une image de ladite image virtuelle (104, 106.2 ; 204, 206.2), et
- le premier foyer (110'.5 ; 210'.5) du système optique est situé à proximité du bord arrière de l'image virtuelle de la surface réfléchissante (106.2 ; 206.2) du premier collecteur (106 ; 206) et le deuxième foyer (110.6 ; 210.6) du système optique est situé à proximité du bord arrière de la surface réfléchissante (116.2 ; 216.2) du deuxième collecteur (116 ; 216).

2. Dispositif lumineux (102' ; 202') selon la revendication 1, **caractérisé en ce que** le premier collecteur (106 ; 206) et la première source lumineuse (104 ; 204) sont situés en-dessous de l'axe optique (108 ; 208) lorsque le dispositif est orienté en position fonctionnelle, le premier faisceau (112 ; 212) étant un faisceau d'éclairage à coupure horizontale supérieure réalisée par le bord arrière de la surface réfléchissante (106.2 ; 206.2) du premier collecteur (106 ; 206).

3. Dispositif lumineux (102 ; 202) pour véhicule automobile comprenant :
- une première source lumineuse (104 ; 204) et une deuxième source lumineuse (114 ; 214) aptes, chacune, à émettre des rayons lumineux ;
- un premier collecteur (106 ; 206) et un deuxième collecteur (116 ; 216) avec, chacun, une surface réfléchissante (106.2, 116.2 ; 206.2, 216.2) concave configurée pour collecter et réfléchir les rayons lumineux émis, respectivement, par la première (104 ; 204) et la deuxième (114 ; 214) source lumineuse ;
- un système optique (110 ; 210) configuré pour projeter les rayons lumineux réfléchis par les surfaces réfléchissantes (106.2, 116.2 ; 206.2, 216.2) des premier (106 ; 206) et deuxième (116 ; 216) collecteurs, respectivement, en un premier faisceau lumineux (112 ; 212) et en un deuxième faisceaux lumineux (118 ; 218) suivant un axe optique du dispositif (108 ; 208) ;
le système optique (110 ; 210) étant configuré pour former une image lumineuse de la surface réfléchissante (106.2, 116.2 ; 206.2, 216.2) de chacun des premier (106 ; 206) et deuxième (116 ; 216) collecteurs, les surfaces réfléchissantes (106.2, 116.2 ; 206.2, 216.2) présentant, par rapport à une direction générale de propagation du faisceau lumineux correspondant, un bord avant et un bord arrière, lesdits bords délimitant dans des directions opposées l'image lumineuse correspondante, et
chacun des premier (112 ; 212) et deuxième (118 ; 218) faisceaux lumineux formant, une partie ou la totalité d'une fonction d'éclairage ou de signalisation qui est distincte de la fonction d'éclairage ou de signalisation de l'autre desdits premier et deuxième faisceaux
**caractérisé en ce que** :
- le système optique (110 ; 210) présente un premier foyer (110.5 ;210.5) situé axialement en arrière d'une limite avant de la surface réfléchissante (106.2 ; 206.2) du premier collecteur (106 ; 206), et un deuxième foyer (110'.6 ; 210'.6) situé axialement en arrière d'une limite avant de la surface réfléchissante (116.2 ; 216.2) du deuxième collecteur (116 ; 216) ;
- le dispositif lumineux comprend, en outre, un miroir (126 ; 226), la surface réfléchissante (116.2 ; 216.2) du deuxième collecteur (116 ; 216) étant configurée pour collecter et réfléchir les rayons lumineux émis par la deuxième source lumineuse (114 ; 214) vers ledit miroir (126 ; 216),
et ledit miroir (126 ;216) étant configuré pour former une image virtuelle (114, 116.2 ; 214, 216.2) de la deuxième source lumineuse (114 ; 214) et de la surface réfléchissante du deuxième collecteur (116 ; 216),
le système optique (110 ; 210) formant une image de ladite image virtuelle (114, 116.2 ; 214, 216.2), et
- le premier foyer (110.5 ; 210.5) du système optique est situé à proximité du bord arrière de la surface réfléchissante (106.2 ; 206.2) du premier collecteur (106 ; 206) et le deuxième foyer (110'.6 ; 210'.6) du système optique est situé à proximité du bord arrière de l'image virtuelle de la surface réfléchissante (116.2 ; 216.2) du deuxième (116 ; 216).

4. Dispositif lumineux (102 ; 202) selon la revendication 3, **caractérisé en ce que** le deuxième collecteur (116 ; 216) et la deuxième source lumineuse (114 ; 214) sont situés au-dessus de l'axe optique (108 ; 208) lorsque le dispositif est orienté en position fonctionnelle, le deuxième faisceau (118 ; 218) étant un faisceau d'éclairage avec une partie supérieure sans coupure horizontale, formée par une partie avant de la surface réfléchissante (116.2 ; 216.2) du deuxième collecteur (116 ; 216).

5. Dispositif lumineux (102 , 102' ; 202, 202') selon l'une des revendications 1 à 4, **caractérisé en ce qu'**au moins un des premier (106 ; 206) et deuxième (116 ; 216) collecteurs est configuré pour que les rayons lumineux réfléchis par une partie arrière de la surface réfléchissante ( 106.2, 116.2 ; 206.2, 216.2) dudit collecteur soient parallèles à l'axe optique (108 ; 208) ou présentent, dans un plan vertical et par rapport audit axe, un angle d'inclinaison inférieur ou égal à 25°, préférentiellement inférieur ou égal à 10°.

6. Dispositif lumineux (102 , 102' ; 202, 202') selon l'une des revendications 1 à 5, **caractérisé en ce que** les première (4 ; 104 ; 204 ; 304) et deuxième (14 ; 114 ; 214 ; 314) sources lumineuses sont configurées pour émettre dans une direction principale perpendiculaire à l'axe optique (8 ; 108 ; 208 ; 308) ou inclinée par rapport à une direction perpendiculaire audit axe optique inférieure ou égale à 25°, et les surfaces réfléchissantes (6.2, 16.2 ; 106.2, 116.2 ; 206.2, 216.2 ; 306.2, 316.2) des premier (6 ; 106 ; 206 ; 306) et deuxième (16 ; 116 ; 216 ; 316) collecteurs présentent un profil elliptique ou parabolique.

7. Dispositif lumineux (102 , 102' ; 202, 202') selon l'une des revendications 1 à 6, **caractérisé en ce que** le système optique est une lentille (110, 110' ; 210, 210') avec une première face d'entrée (110.1, 110'.1 ; 210.1, 210'.1) des rayons lumineux du premier faisceau lumineux (112 ; 212) et une deuxième face d'entrée (110.2, 110'.2 ; 210.2, 210'.2) des rayons lumineux du deuxième faisceau lumineux (118 ; 218).

8. Dispositif lumineux (102 , 102' ; 202, 202') selon la revendication 7, **caractérisé en ce que** les première et deuxième faces d'entrées (110.1, 110.2, 110'.1, 110'.2 ; 210.1, 210.2, 210'.1, 210'.2) sont alignées perpendiculairement à l'axe optique (108 ; 208).

9. Dispositif lumineux (102, 102' ; 202, 202') selon l'une des revendications 7 et 8, **caractérisé en ce que** la lentille (110, 110' ; 210, 210') présente une face de sortie (110.3, 110.4 ; 210.3, 210.4) commune aux première et deuxième faces d'entrée (110.1, 110.2 ; 210.1, 210.2).

10. Dispositif lumineux (102, 102' ; 202, 202') selon l'une des revendications 1 à 9, caractérisé en ce le premier collecteur (106 ; 206) et la première source lumineuse (104 ; 204), d'une part, et le deuxième collecteur (116 ; 216) et la deuxième source lumineuse (114 ; 214), d'autre part, sont disposés côte-à-côte.

11. Dispositif lumineux (102, 102'; 202, 202') selon l'une des revendications 1 à 10, **caractérisé en ce que** le miroir (126) s'étend dans le prolongement de la surface réfléchissante du collecteur correspondant (106, 116), ou le miroir (226) s'étend le long de l'axe optique (208).

12. Dispositif lumineux (102, 102' ; 202, 202') selon l'une des revendications 1 à 11, **caractérisé en ce que** la première (104 ; 204) et la deuxième (114 ; 214) source lumineuse sont disposées sur une platine commune.

## Patentansprüche

1. Leuchtvorrichtung (102'; 202') für ein Kraftfahrzeug, umfassend:
- eine erste Lichtquelle (104; 204) und eine zweite Lichtquelle (114; 214), die jeweils in der Lage sind, Lichtstrahlen auszusenden;
- einen ersten Kollektor (106; 206) und einen zweiten Kollektor (116; 216), jeweils mit einer konkaven reflektierenden Oberfläche (106.2, 116.2; 206.2, 216.2), die konfiguriert ist, um die von der ersten (104; 204) bzw. der zweiten (114; 214) Lichtquelle ausgesendeten Lichtstrahlen zu sammeln und zu reflektieren;
- ein optisches System (110'; 210'), das konfiguriert ist, um die von den reflektierenden Oberflächen (106.2, 116.2; 206.2, 216.2) des ersten (106; 206) und zweiten (116; 216) Kollektors reflektierten Lichtstrahlen jeweils in einen ersten Lichtstrahl (112; 212) und einen zweiten Lichtstrahl (118; 218) entlang einer optischen Achse der Vorrichtung (108; 208) zu projizieren;
wobei das optische System (110'; 210') konfiguriert ist, um ein Lichtbild der reflektierenden Oberfläche (106.2, 116.2; 206.2, 216.2) jedes der ersten (106; 206) und zweiten (116; 216) Kollektoren zu bilden, wobei die reflektierenden Oberflächen (106.2, 116.2; 206.2, 216.2) in Bezug auf eine allgemeine Ausbreitungsrichtung des entsprechenden Lichtstrahls eine Vorderkante und eine Hinterkante aufweisen, wobei die genannten Kanten das entsprechende Lichtbild in entgegengesetzten Richtungen begrenzen, und
wobei jeder der ersten (112; 212) und zweiten (118; 218) Lichtstrahlen einen Teil oder die Gesamtheit einer Beleuchtungs- oder Signalisierungsfunktion bildet, die sich von der Beleuchtungs- oder Signalisierungsfunktion des anderen der genannten ersten und zweiten Strahlen unterscheidet,
**dadurch gekennzeichnet, dass**:
- das optische System (110'; 210') einen ersten Brennpunkt (110'.5; 210'.5) aufweist, der axial hinter einer vorderen Grenze der reflektierenden Oberfläche (106.2; 206.2) des ersten Kollektors (106; 206) liegt, und einen zweiten Brennpunkt (110.6; 210.6), der axial hinter einer vorderen Grenze der reflektierenden Oberfläche (116.2; 216.2) des zweiten Kollektors (116; 216) liegt;
- die Leuchtvorrichtung ferner einen Spiegel (126; 226) umfasst, wobei die reflektierende Oberfläche (106.2; 206.2) des ersten Kollektors (106; 206) konfiguriert ist, um die von der ersten Lichtquelle (104; 204) ausgesendeten Lichtstrahlen zu sammeln und zu dem genannten Spiegel (126; 226) zu reflektieren,
und der genannte Spiegel (126; 216) konfiguriert ist, um ein virtuelles Bild (104, 106.2; 204, 206.2) der ersten Lichtquelle (104; 204) und der reflektierenden Oberfläche des ersten Kollektors (106; 206) zu bilden,
wobei das optische System (110'; 210') ein Bild des genannten virtuellen Bildes (104, 106.2; 204, 206.2) bildet, und
- der erste Brennpunkt (110'.5; 210'.5) des optischen Systems sich in der Nähe der Hinterkante des virtuellen Bildes der reflektierenden Oberfläche (106.2; 206.2) des ersten Kollektors (106; 206) befindet und der zweite Brennpunkt (110.6; 210.6) des optischen Systems sich in der Nähe der Hinterkante der reflektierenden Oberfläche (116.2; 216.2) des zweiten Kollektors (116; 216) befindet.

2. Leuchtvorrichtung (102'; 202') nach Anspruch 1, **dadurch gekennzeichnet, dass** der erste Kollektor (106; 206) und die erste Lichtquelle (104; 204) unterhalb der optischen Achse (108; 208) angeordnet sind, wenn die Vorrichtung in Funktionsposition ausgerichtet ist, wobei der erste Strahl (112; 212) ein Beleuchtungsstrahl mit horizontaler oberer Abgrenzung ist, die durch die Hinterkante der reflektierenden Oberfläche (106.2; 206.2) des ersten Kollektors (106; 206) gebildet wird.

3. Leuchtvorrichtung (102; 202) für ein Kraftfahrzeug, umfassend:
- eine erste Lichtquelle (104; 204) und eine zweite Lichtquelle (114; 214), die jeweils in der Lage sind, Lichtstrahlen auszusenden;
- einen ersten Kollektor (106; 206) und einen zweiten Kollektor (116; 216), jeweils mit einer konkaven reflektierenden Oberfläche (106.2, 116.2; 206.2, 216.2), die konfiguriert ist, um die von der ersten (104; 204) bzw. der zweiten (114; 214) Lichtquelle ausgesendeten Lichtstrahlen zu sammeln und zu reflektieren;
- ein optisches System (110; 210), das konfiguriert ist, um die von den reflektierenden Oberflächen (106.2, 116.2; 206.2, 216.2) des ersten (106; 206) und zweiten (116; 216) Kollektors reflektierten Lichtstrahlen jeweils in einen ersten Lichtstrahl (112; 212) und einen zweiten Lichtstrahl (118; 218) entlang einer optischen Achse der Vorrichtung (108; 208) zu projizieren;
wobei das optische System (110; 210) konfiguriert ist, um ein Lichtbild der reflektierenden Oberfläche (106.2, 116.2; 206.2, 216.2) jedes der ersten (106; 206) und zweiten (116; 216) Kollektoren zu bilden, wobei die reflektierenden Oberflächen (106.2, 116.2; 206.2, 216.2) in Bezug auf eine allgemeine Ausbreitungsrichtung des entsprechenden Lichtstrahls eine Vorderkante und eine Hinterkante aufweisen, wobei die genannten Kanten das entsprechende Lichtbild in entgegengesetzten Richtungen begrenzen, und
wobei jeder der ersten (112; 212) und zweiten (118; 218) Lichtstrahlen einen Teil oder die Gesamtheit einer Beleuchtungs- oder Signalisierungsfunktion bildet, die sich von der Beleuchtungs- oder Signalisierungsfunktion des anderen der genannten ersten und zweiten Strahlen unterscheidet,
**dadurch gekennzeichnet, dass**:
- das optische System (110; 210) einen ersten Brennpunkt (110.5; 210.5) aufweist, der axial hinter einer vorderen Grenze der reflektierenden Oberfläche (106.2; 206.2) des ersten Kollektors (106; 206) liegt, und einen zweiten Brennpunkt (110'.6; 210'.6), der axial hinter einer vorderen Grenze der reflektierenden Oberfläche (116.2; 216.2) des zweiten Kollektors (116; 216) liegt;
- die Leuchtvorrichtung ferner einen Spiegel (126; 226) umfasst, wobei die reflektierende Oberfläche (116.2; 216.2) des zweiten Kollektors (116; 216) konfiguriert ist, um die von der zweiten Lichtquelle (114; 214) ausgesendeten Lichtstrahlen zu sammeln und zu dem genannten Spiegel (126; 216) zu reflektieren,
und der genannte Spiegel (126; 216) konfiguriert ist, um ein virtuelles Bild (114, 116.2; 214, 216.2) der zweiten Lichtquelle (114; 214) und der reflektierenden Oberfläche des zweiten Kollektors (116; 216) zu bilden,
wobei das optische System (110; 210) ein Bild des genannten virtuellen Bildes (114, 116.2; 214, 216.2) bildet, und
- der erste Brennpunkt (110.5; 210.5) des optischen Systems sich in der Nähe der Hinterkante der reflektierenden Oberfläche (106.2; 206.2) des ersten Kollektors (106; 206) befindet und der zweite Brennpunkt (110'.6; 210'.6) des optischen Systems sich in der Nähe der Hinterkante des virtuellen Bildes der reflektierenden Oberfläche (116.2; 216.2) des zweiten (116; 216) befindet.

4. Leuchtvorrichtung (102; 202) nach Anspruch 3, **dadurch gekennzeichnet, dass** der zweite Kollektor (116; 216) und die zweite Lichtquelle (114; 214) oberhalb der optischen Achse (108; 208) angeordnet sind, wenn die Vorrichtung in Funktionsposition ausgerichtet ist, wobei der zweite Strahl (118; 218) ein Beleuchtungsstrahl mit einem oberen Teil ohne horizontale Abgrenzung ist, der durch einen vorderen Teil der reflektierenden Oberfläche (116.2; 216.2) des zweiten Kollektors (116; 216) gebildet wird.

5. Leuchtvorrichtung (102, 102'; 202, 202') nach einem der Ansprüche 1 bis 4, **dadurch gekennzeichnet, dass** mindestens einer der ersten (106; 206) und zweiten (116; 216) Kollektoren so konfiguriert ist, dass die von einem hinteren Teil der reflektierenden Oberfläche (106.2, 116.2; 206.2, 216.2) des genannten Kollektors reflektierten Lichtstrahlen parallel zur optischen Achse (108; 208) verlaufen oder in einer vertikalen Ebene und in Bezug auf die genannte Achse einen Neigungswinkel von weniger oder gleich 25°, vorzugsweise weniger oder gleich 10° aufweisen.

6. Leuchtvorrichtung (102, 102'; 202, 202') nach einem der Ansprüche 1 bis 5, **dadurch gekennzeichnet, dass** die erste (4; 104; 204; 304) und zweite (14; 114; 214; 314) Lichtquelle konfiguriert sind, um in einer Hauptrichtung senkrecht zur optischen Achse (8; 108; 208; 308) oder in einer Richtung, die gegenüber einer Richtung senkrecht zur genannten optischen Achse um weniger oder gleich 25° geneigt ist, zu emittieren, und die reflektierenden Oberflächen (6.2, 16.2; 106.2, 116.2; 206.2, 216.2; 306.2, 316.2) der ersten (6; 106; 206; 306) und zweiten (16; 116; 216; 316) Kollektoren ein elliptisches oder parabolisches Profil aufweisen.

7. Leuchtvorrichtung (102, 102'; 202, 202') nach einem der Ansprüche 1 bis 6, **dadurch gekennzeichnet, dass** das optische System eine Linse (110, 110'; 210, 210') mit einer ersten Eintrittsfläche (110.1, 110'.1; 210.1, 210'.1) für die Lichtstrahlen des ersten Lichtstrahls (112; 212) und einer zweiten Eintrittsfläche (110.2, 110'.2; 210.2, 210'.2) für die Lichtstrahlen des zweiten Lichtstrahls (118; 218) ist.

8. Leuchtvorrichtung (102, 102'; 202, 202') nach Anspruch 7, **dadurch gekennzeichnet, dass** die erste und zweite Eintrittsfläche (110.1, 110.2, 110'.1, 110'.2; 210.1, 210.2, 210'.1, 210'.2) senkrecht zur optischen Achse (108; 208) ausgerichtet sind.

9. Leuchtvorrichtung (102, 102'; 202, 202') nach einem der Ansprüche 7 und 8, **dadurch gekennzeichnet, dass** die Linse (110, 110'; 210, 210') eine Austrittsfläche (110.3, 110.4; 210.3, 210.4) aufweist, die der ersten und zweiten Eintrittsfläche (110.1, 110.2; 210.1, 210.2) gemeinsam ist.

10. Leuchtvorrichtung (102, 102'; 202, 202') nach einem der Ansprüche 1 bis 9, **dadurch gekennzeichnet, dass** der erste Kollektor (106; 206) und die erste Lichtquelle (104; 204) einerseits und der zweite Kollektor (116; 216) und die zweite Lichtquelle (114; 214) andererseits nebeneinander angeordnet sind.

11. Leuchtvorrichtung (102, 102'; 202, 202') nach einem der Ansprüche 1 bis 10, **dadurch gekennzeichnet, dass** sich der Spiegel (126) in Verlängerung der reflektierenden Oberfläche des entsprechenden Kollektors (106, 116) erstreckt, oder der Spiegel (226) sich entlang der optischen Achse (208) erstreckt.

12. Leuchtvorrichtung (102, 102'; 202, 202') nach einem der Ansprüche 1 bis 11, **dadurch gekennzeichnet, dass** die erste (104; 204) und die zweite (114; 214) Lichtquelle auf einer gemeinsamen Platte angeordnet sind.

## Claims

1. Luminous device (102'; 202') for a motor vehicle, comprising:
- a first light source (104; 204) and a second light source (114; 214) that are each able to emit light rays;
- a first collector (106; 206) and a second collector (116; 216) each with a concave reflective surface (106.2, 116.2; 206.2, 216.2) configured to collect and reflect the light rays emitted by the first light source (104; 204) and the second light source (114; 214), respectively;
- an optical system (110'; 210') configured to project the light rays reflected by the reflective surfaces (106.2, 116.2; 206.2, 216.2) of the first collector (106; 206) and of the second collector (116; 216) into a first light beam (112; 212) and into a second light beam (118; 218) along an optical axis of the device (108; 208), respectively;
the optical system (110'; 210') being configured to form a luminous image of the reflective surface (106.2, 116.2; 206.2, 216.2) of each of the first collector (106; 206) and second collector (116; 216), the reflective surfaces (106.2, 116.2; 206.2, 216.2) having, with respect to a general direction of propagation of the corresponding light beam, a front edge and a rear edge, said edges bounding in opposite directions the corresponding luminous image, and
each of the first light beam (112; 212) and second light beam (118; 218) forming a portion or the entirety of a lighting or signalling function that is distinct from the lighting or signalling function of the other of said first and second beams,
**characterized in that**
- the optical system (110';210') has a first focal point (110'.5; 210'.5) located axially behind a front limit of the reflective surface (106.2; 206.2) of the first collector (106; 206), and a second focal point (110.6; 210.6) located axially behind a front limit of the reflective surface (116.2; 216.2) of the second collector (116; 216); and
- said luminous device furthermore comprises a mirror (126; 226), the reflective surface (106.2; 206.2) of the first collector (106; 206) being configured to collect and reflect the light rays emitted by the first light source (104; 204) toward said mirror (126; 226)
and said mirror (126; 216) being configured to form a virtual image (104, 106.2; 204, 206.2) of the first light source (104; 204) and of the reflective surface of the first collector (106; 206),
the optical system (110'; 210') forming an image of said virtual image (104, 106.2; 204, 206.2) and
- the first focal point (110'.5; 210'.5) of the optical system is located in proximity to the rear edge of the virtual image of the reflective surface (106.2; 206.2) of the first collector (106; 206) and the second focal point (110.6; 210.6) of the optical system is located in proximity to the rear edge of the reflective surface (116.2; 216.2) of the second collector (116; 216).

2. Luminous device (102'; 202') according to Claim 1, **characterized in that** the first collector (106; 206) and the first light source (104; 204) are located below the optical axis (108; 208) when the device is oriented in functional position, the first beam (112; 212) being a lighting beam containing an upper flat cutoff formed by the rear edge of the reflective surface (106.2; 206.2) of the first collector (106; 206).

3. Luminous device (102; 202) for a motor vehicle, comprising:
- a first light source (104; 204) and a second light source (114; 214) that are each able to emit light rays;
- a first collector (106; 206) and a second collector (116; 216) each with a concave reflective surface (106.2, 116.2; 206.2, 216.2) configured to collect and reflect the light rays emitted by the first light source (104; 204) and the second light source (114; 214), respectively;
- an optical system (110; 210) configured to project the light rays reflected by the reflective surfaces (106.2, 116.2; 206.2, 216.2) of the first collector (106; 206) and of the second collector (116; 216) into a first light beam (112; 212) and into a second light beam (118; 218) along an optical axis of the device (108; 208), respectively;
the optical system (110; 210) being configured to form a luminous image of the reflective surface (106.2, 116.2; 206.2, 216.2) of each of the first collector (106; 206) and second collector (116; 216), the reflective surfaces (106.2, 116.2; 206.2, 216.2) having, with respect to a general direction of propagation of the corresponding light beam, a front edge and a rear edge, said edges bounding in opposite directions the corresponding luminous image, and
each of the first light beam (112; 212) and second light beam (118; 218) forming a portion or the entirety of a lighting or signalling function that is distinct from the lighting or signalling function of the other of said first and second beams,
**characterized in that**
- the optical system (110; 210) has a first focal point (110.5; 210.5) located axially behind a front limit of the reflective surface (106.2; 206.2) of the first collector (106; 206), and a second focal point (110'.6; 210'.6) located axially behind a front limit of the reflective surface (116.2; 216.2) of the second collector (116; 216); and
- said luminous device furthermore comprises a mirror (126; 226), the reflective surface (116.2; 216.2) of the second collector (116; 216) being configured to collect and reflect the light rays emitted by the second light source (114; 214) toward said mirror (126; 216),
and said mirror (126; 216) being configured to form a virtual image (114, 116.2; 214, 216.2) of the second light source (114; 214) and of the reflective surface of the second collector (116; 216),
the optical system (110; 210) forming an image of said virtual image (114, 116.2; 214, 216.2), and
- the first focal point (110.5; 210.5) of the optical system is located in proximity to the rear edge of the reflective surface (106.2; 206.2) of the first collector (106; 206) and the second focal point (110'.6; 210'.6) of the optical system is located in proximity to the rear edge of the virtual image of the reflective surface (116.2; 216.2) of the second collector (116; 216).

4. Luminous device (102; 202) according to Claim 3, **characterized in that** the second collector (116; 216) and the second light source (114; 214) are located above the optical axis (108; 208) when the device is oriented in functional position, the second beam (118; 218) being a lighting beam with an upper portion without flat cutoff, formed by a front portion of the reflective surface (116.2; 216.2) of the second collector (116; 216).

5. Luminous device (102, 102'; 202, 202') according to one of Claims 1 to 4, **characterized in that** at least one of the first collector (106; 206) and second collector (116; 216) is configured so that the light rays reflected by a rear portion of the reflective surface (106.2, 116.2; 206.2, 216.2) of said collector are parallel to the optical axis (108; 208) or have, in a vertical plane with respect to said axis, an angle of inclination smaller than or equal to 25°, and preferably smaller than or equal to 10°

6. Luminous device (102, 102'; 202, 202') according to one of Claims 1 to 5, **characterized in that** the first light source (4; 104; 204; 304) and second light source (14; 114; 214; 314) are configured to emit in a main direction that is perpendicular to the optical axis (8; 108; 208; 308) or that is inclined with respect to a direction perpendicular to said optical axis by an angle smaller than or equal to 25°, and the reflective surfaces (6.2, 16.2; 106.2, 116.2; 206.2, 216.2; 306.2, 316.2) of the first collector (6; 106; 206; 306) and second collector (16; 116; 216; 316) have an elliptical or parabolic profile.

7. Luminous device (102, 102'; 202, 202') according to one of Claims 1 to 6, **characterized in that** the optical system is a lens (110, 110'; 210, 210') with a first entrance face (110.1, 110'.1; 210.1, 210'.1) for the light rays of the first light beam (112; 212) and a second entrance face (110.2, 110'.2; 210.2, 210'.2) for the light rays of the second light beam (118; 218).

8. Luminous device (102, 102'; 202, 202') according to Claim 7, **characterized in that** the first and second entrance faces (110.1, 110.2, 110'.1, 110'.2; 210.1, 210.2, 210'.1, 210'.2) are aligned perpendicular to the optical axis (108; 208).

9. Luminous device (102, 102'; 202, 202') according to one of Claims 7 and 8, **characterized in that** the lens (110, 110'; 210, 210') has an exit face (110.3, 110.4; 210.3, 210.4) common to the first and second entrance faces (110.1, 110.2; 210.1, 210.2).

10. Luminous device (102, 102'; 202, 202') according to one of Claims 1 to 9, **characterized in that** the first collector (106; 206) and the first light source (104; 204), on the one hand, and the second collector (116; 216) and the second light source (114; 214), on the other hand, are placed side-by-side.

11. Luminous device (102, 102'; 202, 202') according to one of Claims 1 to 10, **characterized in that** the mirror (126) lies in the extension of the reflective surface of the corresponding collector (106, 116), or the mirror (226) lies on the optical axis (208).

12. Luminous device (102, 102'; 202, 202') according to one of Claims 1 to 11, **characterized in that** the first light source (104; 204) and the second light source (114; 214) are placed on a common platen.
